# EUROPEAN PATENT APPLICATION

(11) **EP 2 386 994 A1**
(43) Date of publication of application: **16.11.2011**
(21) Application number: 11161282.6
(22) Date of filing: 06.04.2011
(51) Int. Cl.: G06Q 30/00, G11B 20/00, G06F 21/00

(54) **Server apparatus and information processing system**

(30) Priority: 11.05.2010 JP 2010109510
(71) Applicant: Sony Corporation, Tokyo 108-0075 (JP)
(72) Inventor: Abiko, Tsuyoshi, Minato-ku Tokyo 108-0075 (JP); Ueda, Kenjiro, Minato-ku Tokyo 108-0075 (JP)
(74) Representative: Haines, Miles John L.S.

(57) **Abstract**

A server apparatus includes a first payment-information transmitting and receiving unit and a copy-permission-information providing unit. The first payment-information transmitting and receiving unit transmits and receives, via a network with respect to an information processing apparatus capable of reproducing a medium for rental in which a content protected from copying is recorded, information about payment necessary for obtaining a copy permission of a content recorded in the medium. The copy-permission-information providing unit provides information of permitting copying of the content via the network to the information processing apparatus every time when the copy-permission-information providing unit confirms completion of the payment through the transmission and reception of the information about the payment with respect to the information processing apparatus of the user.

## Description

The present invention relates to a server apparatus and an information processing system. More specifically, the present invention relates to a apparatus and an information processing system, which perform a copy permission management of content recorded in a medium such as a disc for rental.

In recent years, there have been utilized many DVDs (Digital Versatile Discs), BDs (Blu-ray Discs (registered trademark)), and the like as information recording media (media) of various contents such as movies and music. Regarding most of the contents such as music data, image data, and the like which are recorded in the information recording media, the creators, the buyers, or the like have copyright or distribution right. Therefore, even on a user who has purchased the disc, there is predetermined limitation for using contents recorded in the disc. For example, it is not allowed for the user to copy the contents recorded in the disc in a medium such as another disc without limitation.

As a copy control configuration for the contents stored in the medium as described above, there has been known a copy allowance process configuration using reception of copy permission information from a management server as a condition. Specifically, processes are performed in the following sequence.

The user mounts a medium such as a content-storing disc to user's apparatus such as a PC or a recording/reproducing apparatus, and the user's apparatus is connected via a network to the management server. After that, the user's apparatus transmits information defined in advance, such as a disc identifier (ID), to the server. After the server confirms legitimacy or the like of the received information, the server transmits copy permission information to the user's apparatus. The user's apparatus is capable of starting a copy process, using the reception of the copy permission information from the server as the condition thereof.

The above-mentioned copy control configuration is called a managed copy (MC), and the details thereof are described, for example, in Japanese Patent Application Laid-open No. 2008-98765.

On the other hand, there has been an AACS (Advanced Access Content System) standard as a standard relating to a copyright protection technique for contents. Most of contents recorded in the disc such as BDs according to AACS standard are recorded as encrypted contents. As a typical encryption configuration in AACS standard, there has been a configuration in which content is divided into units and different encryption keys are applied for the respective units. By employing the above-mentioned encryption configuration, use managements for the content in units are allowed, to thereby achieve strict and various content use managements.

The managed copy (MC) is under consideration as a mechanism for permitting copying with respect to content that the user has purchased in an operation thereof. However, in recent years, in the distribution field for media in which content is recorded, there have been more and more occasions where digital content is provided to end users in a rental form. In the above-mentioned situation, there is a case where a user wants to save a copy of the content in a medium for the user when the user likes the content after viewing the content stored in the medium that the user has rented.

In view of the circumstances as described above, there is a need for providing a server apparatus and an information processing system, which are capable of performing a copy permission management of content recorded in a medium for rental.

### SUMMARY OF INVENTION

According to an embodiment of the present invention, is provided a server apparatus a first payment-information transmitting and receiving unit and a copy-permission-information providing unit. The first payment-information transmitting and receiving unit transmits and receives, via a network with respect to an information processing apparatus capable of reproducing a medium for rental in which a content protected from copying is recorded, information about payment necessary for obtaining a copy permission of a content recorded in the medium. The copy-permission-information providing unit provides information of permitting copying of the content via the network to the information processing apparatus every time when the copy-permission-information providing unit confirms completion of the payment through the transmission and reception of the information about the payment with respect to the information processing apparatus of the users.

According to the embodiment of the present invention, it is possible to provide a service that if a user likes the content of the medium for rental after viewing, the user is allowed to copy that content through paying a predetermined fee.

The first payment-information transmitting and receiving unit may transmit and receive payment data as the information about the payment with respect to the information processing apparatus of the user. Further, the copy-permission-information providing unit may perform a payment process through the transmission and reception of the payment data, and may provide the information of permitting the copying of the content via the network to the information processing apparatus when the copy-permission-information providing unit confirms the completion of the payment process.

The first payment-information transmitting and receiving unit may receive, from the information processing apparatus of the user, authentication information indicating the completion of the payment as the information about the payment. Further, the copy-permission-information providing unit may determine legitimacy of the authentication information indicating the completion of the payment, and may provide the information of permitting the copying of the content via the network to the information processing apparatus when the copy-permission-information providing unit determines that the authentication information is legitimate.

According to another embodiment of the present invention, there is provided an information processing system including an information processing apparatus of a user and a server apparatus. The information processing apparatus includes a second payment-information transmitting and receiving unit and a copy unit. The second payment-information transmitting and receiving unit transmits and receives, via a network with respect to the server apparatus, information about payment necessary for obtaining a copy permission of a content of a medium for rental in which the content protected from copying is recorded. The copy process unit obtains information of permitting copying of the content via the network from the server apparatus and records a copy of the content of the medium for rental in a medium for user, to thereby perform the copying of the content. The server apparatus includes a first payment-information transmitting and receiving unit and a copy-permission-information providing unit. The first payment-information transmitting and receiving unit transmits and receives with respect to the information processing apparatus via the network the information about payment. The copy-permission-information providing unit provides the information of permitting copying of the content via the network to the information processing apparatus every time when the copy-permission-information providing unit confirms completion of the payment through transmission and reception of the information about the payment with respect to the information processing apparatus.

As described above, according to the embodiments of the present invention, it is possible to perform the copy permission management of the content stored in the medium for rental.

### BRIEF DESCRIPTION OF THE DRAWINGS

For a understanding of the invention and to show how the same may be carried into effect reference is now made by way of example to the accompanying drawings in which:
Fig. 1 is a view showing a relation between an information processing apparatus of a user, a rental agency, a management server, and a content-providing agency in a first embodiment;
Fig. 2 is a view showing a configuration of an information processing system of the first embodiment;
Fig. 3 is a flowchart showing a flow of a managed copy process in the information processing apparatus of Fig. 2;
Fig. 4 is a flowchart showing a flow of a managed copy process in the management server of Fig. 2;
Fig. 5 is a view showing a relation between an information processing apparatus of a user, a rental agency, a management server, and a content-providing agency in a second embodiment;
Fig. 6 is a view showing a configuration of an information processing system of the second embodiment;
Fig. 7 is a flowchart showing a flow of a managed copy process in the information processing apparatus of Fig. 6;
Fig. 8 is a flowchart showing a flow of a managed copy process in the management server of Fig. 6; and
Fig. 9 is a view showing a modified example of the relation between the information processing apparatus of the user, the rental agency, the management server, and the content-providing agency.

### DETAILED DESCRIPTION

A first embodiment is now described. The first embodiment to a managed copy (MC) process to be applied in a case where a content stored in a medium for rental, which a user has rented from a rental agency, the content being protected from copying, is copied in a medium for user through an information processing apparatus of the user.

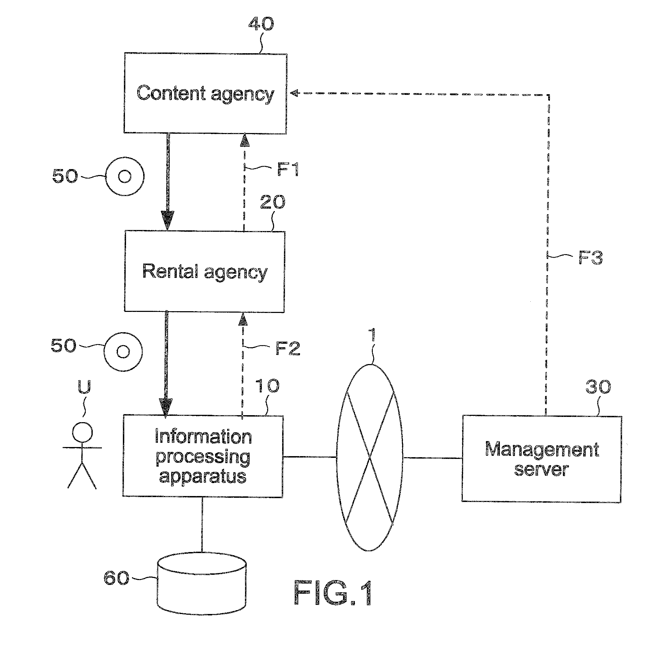

Fig. 1 is a view showing a relation between an information processing apparatus 10 of a user, a rental agency 20, a management server 30, and a content-providing agency 40 in this embodiment.

The rental agency 20 rents media 50 for rental including various titles from the content-providing agency 40, and pays the content-providing agency 40 a rental fee F1. A user U goes to a store of the rental agency 20, rents a medium 50 for rental having a title, that the user wants to view, from the rental agency 20, and pays the rental agency 20 a rental fee F2. In a case where the user U wants to use the information processing apparatus 10 to copy a content, which is recorded in the rented medium 50 and is protected from copying, in a medium 60 for user, the user U accesses via an Internet 1 (network 1) the management server 30 managing a copy permission and the like of that content. After transmission and reception of information necessary for obtaining a copy permission of the content, which, for example, include payment between the information processing apparatus 10 and the management server 30, the information processing apparatus 10 obtains copy permission information (Permission) from the management server 30, and uses this to record the content in the medium 60 for user being a copy destination. A copy fee F3, which is collected during the payment process between the management server 30 and the user of the information processing apparatus 10, is passed to the content-providing agency 40 through some means.

Here, the medium 50 for rental is supposed to be a BD (Blu-ray Disc (registered trademark)) or the like, and it is sufficient that the medium 50 for rental be a medium in which an encrypted content according to an AACS (Advanced Content System) standard being a standard relating to a copyright protection technique for contents is recorded. The encrypted content according to the AACS standard is divided into units, and recorded as encrypted data in which different encryption keys are applied the respective units. With the configuration in units, a use management for each unit is allowed, and rigid and various content use managements can be realized.

Next, the description will be made of a configuration of an information processing system for realizing a managed copy process of a content of this embodiment in a rental medium distributing process.

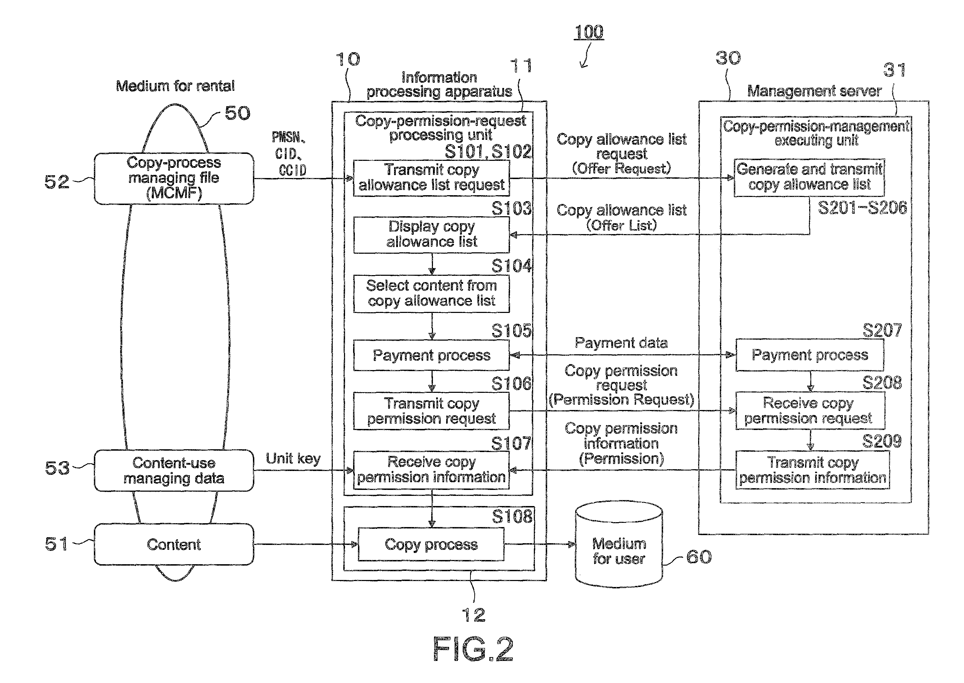

Fig. 2 is a view showing the configuration of the information processing system of this embodiment.

As shown in the figure, this information processing system 100 includes the information processing apparatus 10 to perform a process of reading a content from the medium 50 for rental and recoding the content in the medium 60 for user in which data can be recorded. In addition, the information processing system 100 includes the management server 30 to execute a providing process for permission information in this content copy process and management data.

Here, the medium 50 for rental is, for example, a ROM disc or a disc such as a Blu-ray Disc (registered trademark).

The medium 60 for user being the copy destination of the content is, for example, a recoding medium such as a hard disc (HDD), an R type or RE type Blu-ray Disc (registered trademark), or a DVD disc.

In the medium 50 for rental content 51 encrypted according to the AACS standard is recorded. The content 51 to be recorded include, for example, an AV (Audio Visual) stream of a moving image content such as an HD (High Definition) movie content being high-definition moving image data, or music data, a game program, an image file, audio data, text data, and the like. The encrypted content is, for example, an encrypted content, which has a configuration with which a use management for content management unit (CPS unit) can be performed, and in which different unit keys (CPS unit keys) are applied in the respective content management units (CPS units).

Further, in the medium 50 for rental, are stored, as a copy-process managing file (MCMF) 52, a URI (URL) for specifying the management server 30 to be accessed when a copy permission of the content 51 is requested, a content ID (CID) serving as an identifier of the content 51, an ID of the content certificate (CC) (CCID) indicating legitimacy of the content 51, a PMSN (Pre-recorded Media Serial Number) serving as a medium identifier, and the like. In addition, in the medium 50 for rental, there is stored, as content-use managing data 53, a CCI (Copy Control Information) being copy/reproduction control information, and a CPS unit key being an encryption key to be set for each of the content management units (CPS units) being as content-use management units. In addition, there are stored an MKB (Media Key Block) being an encryption key block in which key information (medium 50 key) for obtaining a CPS unit key is stored, and the like.

In addition, in the medium 50 for rental, there are stored application programs (not shown) to be executed in the information processing apparatus 10 when a copy process of the content 51 is performed. The application programs includes an application program for executing a communication with respect to the management server 30, an application program dedicated to the payment process, and the like. When copying of the content 51 is executed, those application programs are executed in the information processing apparatus 10.

The information processing apparatus 10 is, specifically, a PC, a recording/reproducing apparatus, or the like, and includes computer hardware including a CPU to execute applications read from the medium 50 for rental, a main memory, and the like. The information processing apparatus 10 is provided with a copy-permission-request processing unit (second payment-information transmitting and receiving unit) 11 to transmit and receive, via the network 1 with respect to the management server 30, various information including information about payment, which is for obtaining a copy permission of the content 51 by the applications and the computer hardware. In addition, in the information processing apparatus 10, there is provided a recording unit 12 (copy process unit) to read the content 51 from the medium 50 for rental and record the content 51 in the medium 60 for user being the copy destination.

Regarding the managed copy process, the copy-permission-request processing unit 11 executes the following processes.
(a) Server access process using the URI of the copy-process managing file (MCMF),
(b) Obtaining process for a copy allowance list (Offer List) from the management server 30,
(c) Transmission process for process selection information by the user to the management server 30,
(d) Payment process,
(e) Obtaining process and check process for copy permission information (Permission) from the management server 30, and output process of the copy permission information to the recording unit 12.

The management server 30 is, specifically, a PC or the like, and includes computer hardware including a CPU to execute an application program for performing a permission management for copying the content 51 recorded in the medium 50 for rental, a main memory, and the like. For this, a copy-permission-management executing unit 31 (first payment-information transmitting and receiving unit, copy-permission-information providing unit) of the management server 30 is provided.

The copy-permission-management executing unit 31 executes, more specifically, the following processes.
(A) Providing process for the copy allowance list (Offer List) to the information processing apparatus 10,
(B) Payment process,
(C) Providing for copy permission information (Permission) to the information processing apparatus 10.

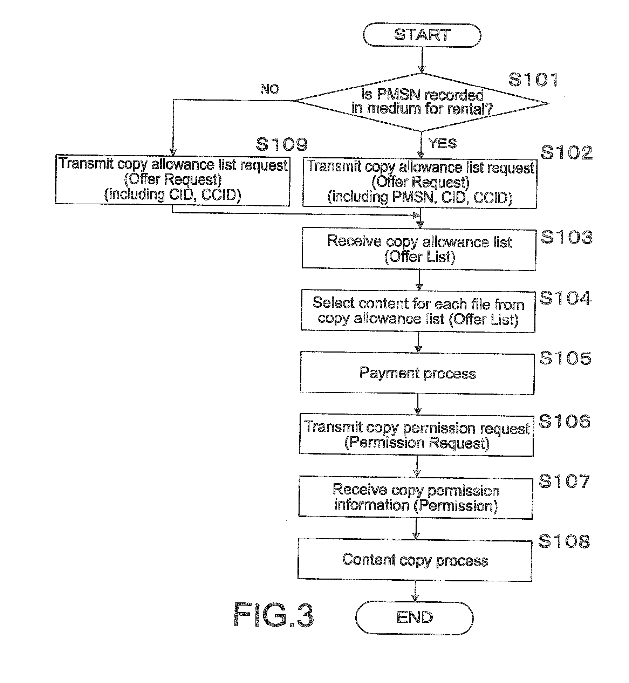

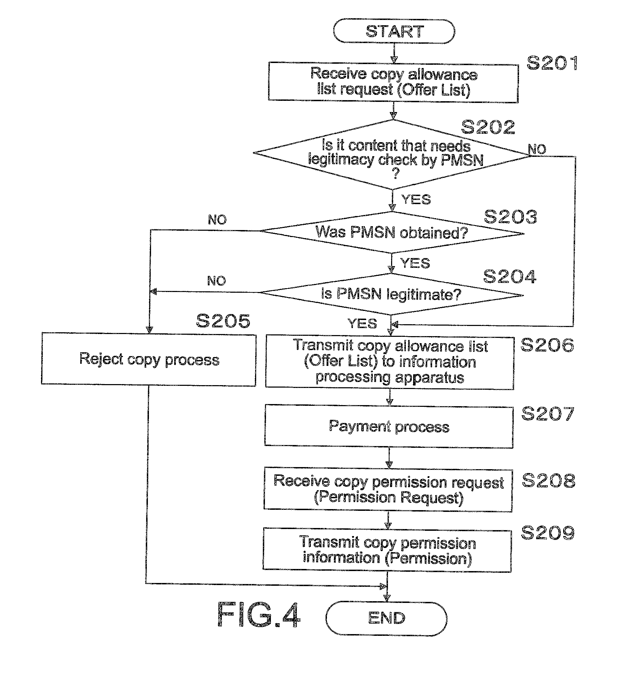

Next, the description will be made of the copy between the information processing apparatus 10 and the management server 30 with reference to Fig. 2, Fig. 3, and Fig. 4. It should be noted that, Fig. 3 is a flowchart showing the managed copy process in the information processing apparatus 10, and Fig. 4 is a flowchart showing the managed copy process in the management server 30.

The information processing apparatus 10 checks, first, whether the PMSN being as the medium identifier is recorded in Burst Cutting Area of the medium 50 for rental (Fig. 3: Step S101). In a case where the PMSN is recorded, the information processing apparatus 10 read the copy-process managing file (MCMF) a URI (URL) of the management server 30, a content ID, and a content certificate ID, and transmits a copy allowance list request (Offer Request) including the PMSN, the content ID (CID), and the content certificate ID (CCID) to the management server 30 (Fig. 3: Step S102). It should be noted that in a case where the PMSN is not recorded, the information processing apparatus 10 transmits a copy allowance list request (Offer Request) including the content ID and the content certificate ID (CCID) to the management server 30 (Fig. 3: Step S109).

When the management server 30 receives the copy allowance list request (Offer Request) (Fig. 4: Step S201), the management server 30 determines, based on the content ID (CID) included in this request, whether the content is a content that needs legitimacy check by the PMSN in determination of the copy permission (Fig. 4: Step S202). This determination is performed, for example, in such a manner that the list of content lDs (CIDs) or content certificate IDs (CCIDS) of contents that need legitimacy check by the PMSN is prepared in the management server 30 in advance, and matching between the list and the received content ID (CID) are performed.

In a case where the content is the content that needs legitimacy check by the PMSN in determination of the copy permission (Fig. 4: YES in Step S202), the management server 30 determines whether the PMSN was obtained by the information processing apparatus 10 (Fig. 4: Step S203). In a case where the PMSN was obtained (Fig. 4: YES in S203), the management server 30 determines whether the PMSN is legitimate, based on the PMSN, the content ID (CID), the content certificate ID (CCID) (Fig. 4: Step S204). In a case where the PMSN was not received (Fig. 4: NO in Step S203), or in a case where it is determined that the PMSN is illegitimate (Fig. 4: NO in Step S204), the management server 30 determines that the copy process of the content should be rejected (Fig. 4: Step S205). At this time, the managed copy process on the management server 30 side is terminated. Further, in this case, the management server, 30 may notify the information processing apparatus 10 that due to illegitimate PMSN, copying is not allowed, and, in the information processing apparatus 10, the notification from the management server 30 may be provided on a display or the like to the user U.

On the other hand, in a case where it is determined in Step S204 that the PMSN is legitimate (Fig. 4: YES in Step S204), the management server 30 generates a copy allowance list (Offer List), and transmits the copy allowance list to the information processing apparatus 10 (Fig. 4: Step S206). Here, the copy allowance list is, for example, a list including information about the list of files the managed copy of which is allowed in a content constituted of one or more files, for example.

When the information processing apparatus 10 obtains the copy allowance list (Offer List) from the management server 30, the information processing apparatus 10 displays the copy allowance list (Offer List) on the display (Fig. 3: Step S103). When the user of the information processing apparatus 10 specifies a file being a target to be copied in the above-mentioned list (Fig. 3: Step S104), the information processing apparatus 10 executes the transmission and the reception of information about payment necessary for obtaining the copy permission of the content for each file, with respect to the management server 30 (Fig. 3: Step S105, Fig. 4: Step S207). Specifically, between the information processing apparatus 10 and the management server 30, a process of transferring payment data or the like is performed.

When the payment necessary for obtaining the copy permission is terminated without problem between the information processing apparatus 10 and the management server 30 (Fig. 4: YES in Step S208), the information processing apparatus 10 transmits a copy permission request (Permission Request) to the management server 30 (Fig. 3: Step S106).

When the management server 30 receives the copy permission request (Permission Request) from the information processing apparatus 10 (Fig. 4: Step S208), the management server 30 transmits copy permission information (Permission) to the information processing apparatus 10 (Fig. 4: Step S209).

When the information processing apparatus 10 obtains the copy permission information (Permission) from the management server 30 (Fig. 3: Step S107), the information processing apparatus 10 transitions to a content copy process (Fig. 3: Step S108). In this content copy process, the information processing apparatus 10 retrieves, from the medium 50 for rental based on the copy permission information (Permission), a unit key corresponding to a CPS unit of an encrypted content being a target to be copied. Next, the information processing apparatus 10 reads the CPS unit being a target to be copied in the encrypted content recorded in the medium 50 for rental, and subjects the CPS unit to a decoding process. Then, the information processing apparatus 10 records it in the medium 60 for user to be the copy destination.

As described above, in this embodiment, the managed copy process is introduced in the distribution process for the rental media in which contents protected from copying are recorded, and hence, if a user likes the content of the medium 50 for rental after viewing, the user is allowed to copy that content through paying a predetermined fee. With this, it is possible to achieve an increase of total content users including rentals, an increase of occasions in which the managed copy is utilized, and the like, and hence further development in the content distributing industry can be expected.

Further, in this embodiment, while copyrights to be can be managed and protected, a user who rented the medium 50 additional obtains (pursues) the content that the user wants to have after viewing. With this, it is possible further enhance convenience for users who utilize rental services.

By the way, according to the managed copy process of this embodiment, even if a user who has rented the medium 50 from the rental agency 20 lends it to a different user for free, and the different user wants to save a copy of the content recorded in the medium 50, the different user can obtain copy permission information from the management server 30 in the above-mentioned manner, to thereby save the copy of the content.

That is, in the management server 30, if the PMSN is legitimate and completed payment with respect to the information processing apparatus 10 of the user can be confirmed, the copy permission is provided. With this system, it is possible to realize managed copy services suitable for the medium 50 for rental, the copy permission list requests of which are expected to be transmitted by the same PMSN to the management server 30 many times.

Further, in rental business in the past, renting between users are generally forbidden by contract because it may cause troubles such as long-overdue rental or loss and further it may deteriorate profits of the rental agencies. In contrast, in this embodiment, even if the rental agencies allow renting between the users, the rental agencies can separately increase the profits. As a result, free distribution of the media for rental between the users can be realized, and it is possible to further enhance convenience for the users who utilize rental services.

A second embodiment is now described. In the second embodiment it is assumed that in the managed copy process to be applied in the case where the content stored in the medium for rental, which the user has rented from the rental agency, with the content being protected from copying, is copied on the medium for user through the information processing apparatus of the user, the user performs payment with respect to not the management server, but the rental agency.

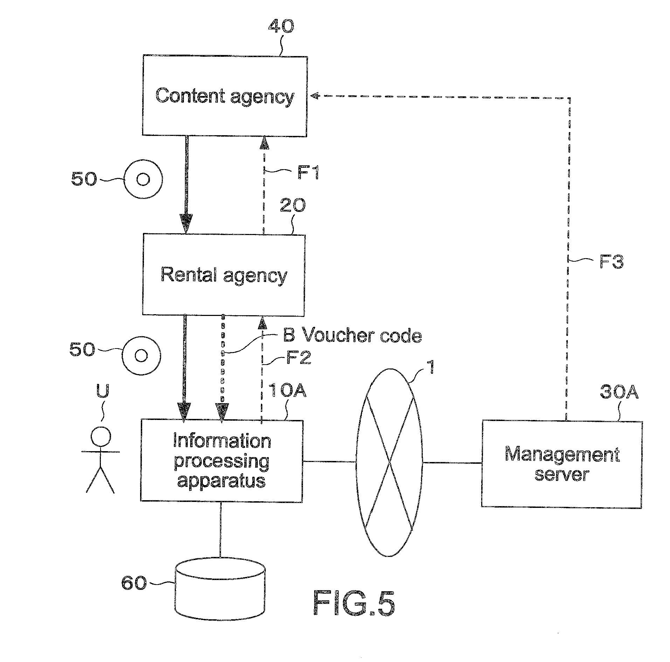

Fig. 5 is a view showing a relation between an information processing apparatus 10A of the user, a rental agency 20, a management server 30A, and the content-providing agency 40 in the second embodiment.

The rental agency 20 rents media 50 including various titles from the content-providing agency 40, and pays the content-providing agency 40 a rental fee F1. A user U goes to a store of the rental agency 20, rents a medium 50 of a title, that the user wants to view, from the rental agency 20, and pays the rental agency 20 a rental fee F2. At this time, in a case where the user U wants to copy a content, which is stored in the above-mentioned medium 50, in a medium 60 for user, the user U informs the rental agency 20 accordingly, to thereby pursue a copyright thereof. The copyright is provided in such a manner that the user U is notified of a code B (hereinafter, referred to as "voucher code") issued by the rental agency 20. The voucher code B is, for example, a code issued with respect to the rental agency 20 from the management server 30A in advance, and all codes are desirably unique codes. In the management server 30A, the issued voucher codes are managed while being each associated with the content ID (CID) and the content certificate ID (CCID) of the corresponding content. In a case where the user U wants to use the information processing apparatus 10A to copy a content recorded in the medium 50, that the user U has rented, in the medium 60 for user, the user U accesses the management server 30A managing a copy permission thereof and the like via the Internet 1. After transmission and reception of information necessary for obtaining a copy permission of the content, which, for example, include payment between the information processing apparatus 10A and the management server 30A, the information processing apparatus 10A obtains copy permission information (Permission) from the management server 30A, and uses this to record the content in the medium 60 for user.

Next, the description will be made of a configuration of an information processing for realizing a managed copy process of a content of this embodiment in a rental medium distributing process.

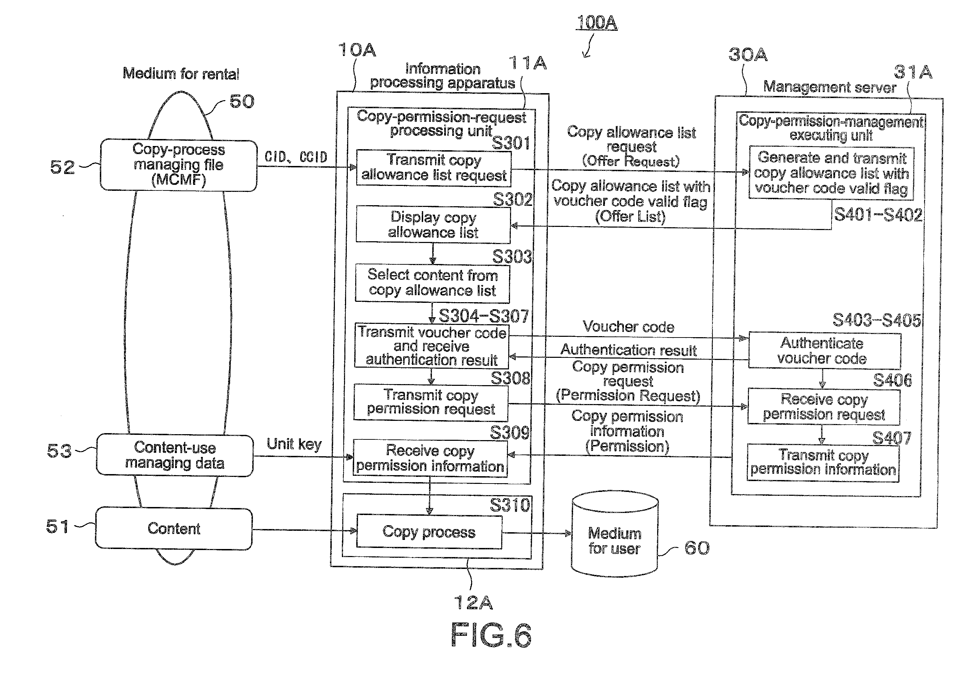

Fig. 6 is a view showing the configuration of the information processing system 100A of this embodiment.

Here, the configuration of the medium 50 for rental is the as that of the first embodiment except for an application program recorded therein. In the information processing apparatus 10A, there is provided a copy-permission-request processing unit (second payment information transmitting and receiving unit) 11A to transmit and receive information necessary for obtaining a copy permission of the content 51 by use of the above-mentioned application and computer hardware via the network 1 with respect to the management server 30. In addition, in the information processing apparatus 10, a recording unit 12A to read from the medium 50 for rental the content 51 and record the content 51 in the medium 60 for user being the copy destination is provided.

Regarding the managed copy process, the copy-permission-request processing unit 11A executes the following processes.
(a) Server access process using the URI of the copy-process managing file (MCMF),
(b) Obtaining process for a copy allowance list (Offer List) from the management server 30A,
(c) Transmission process for process selection information by the user to the server,
(d) Transmission process for the voucher code,
(e) Obtaining process and a check process for copy permission information (Permission) from the management server 30A, and an output of copy permission information to the recording unit 12A.

The management server 30A includes computer hardware including a CPU to perform an application program for performing a permission control for copying the content 51 recorded in medium 50 for rental, a main memory, and the like. For this, a copy-permission-management executing unit 31A (first payment-information transmitting and receiving unit, a copy-permission-information providing unit) of the management server 30A is provided.

The copy-permission-management executing unit 31A executes, more specifically, the following processes.
(A) Providing process for the copy allowance list (Offer List) to the information processing apparatus 10A,
(B) Process of obtaining the voucher code and providing the copy allowance list (Offer List),
(C) Providing process for copy permission information (Permission) to the information processing apparatus 10A.

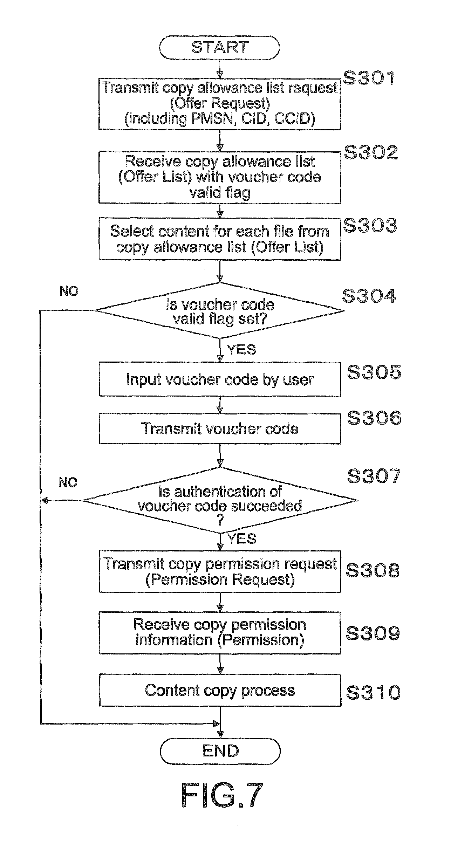

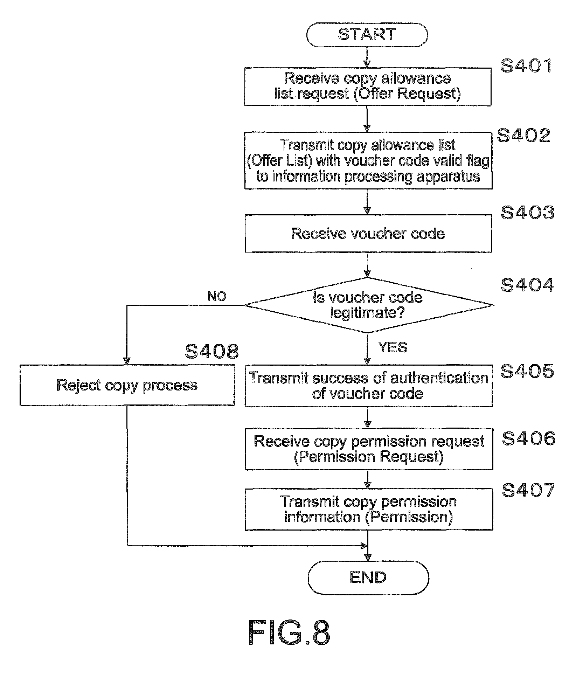

Next, the description will be made of the managed copy process between the information processing apparatus 10A and the management server 30A with reference to Fig. 6, Fig. 7, and Fig. 8. It should be noted that, Fig. 7 is a flowchart showing the managed copy process in the information processing apparatus 10A, and Fig. 8 is a flowchart showing the managed copy process in the management server 30A.

The information processing apparatus 10A transmits, first, from the copy-process managing file (MCMF) stored in the medium 50 for rental, the copy allowance list request (Offer Request) including the content 10 (CID) and the content certificate ID (CCID) to the management server 30A (Fig. 7: Step S301).

When the management server 30A receives the copy allowance list request (Offer Request) (Fig. 8: Step S401), the management server 30A generates, based on the content ID (CID) and the content certificate ID (CCID) included in this request, the copy allowance list (Offer List) with a voucher code valid flag. This copy allowance list with the voucher code valid flag is generated in the following manner.

The management server 30A determines, based on the obtained content ID (CID) and content certificate ID (CCID), whether the content is a content corresponding to a managed copy by the voucher code. The management server 30A manages the list of content IDs (CID) and content certificate IDs (CCID) of contents corresponding to a managed copy by the voucher code, and is set to add a content ID (CID) of a content having a title rented to the rental agency 20 to the list. The management server 30A performs matching between the list, and the content ID (CID) and the content certificate ID (CCID) include in the copy allowance list request (Offer Request) from the information processing apparatus 10A, and determines whether it is the content corresponding to the managed copy by the voucher code. In a case where it is determined that it is the content corresponding to the managed copy by the voucher code, the management server 30A sets, in the copy allowance list (Offer List), a flag (voucher code valid flag) indicating that it is the content corresponding to the managed copy by the voucher code for each of the files constituting the content. The management server 30A transmits the copy allowance list (Offer List) thus generated to the information processing apparatus 10A (Fig. 8: Step S402).

When the information processing apparatus 10A obtains from the management server 30A the copy allowance list (Offer List), the information processing apparatus 10A displays the copy allowance list (Offer List) on the display (Fig. 7: Step S302). When the user of the information processing apparatus 10A specifies a file being a target to be copied in the above-mentioned list (Fig. 7: Step S303), whether the voucher code valid flag is set with respect to the content for each file is checked (Fig. 7: Step S304). In a case where the voucher code valid flag is not set (Fig. 7: NO in Step S304), it means that copying without the voucher code is allowed. In this case, the information processing apparatus 10A transmits to the management server 30A a copy permission request (Permission Request) (Fig. 7: Step S308). An operation after the copy permission request is transmitted to the management server 30A will be described later. It should be noted that, in a case where a content being a target to be copied is a charged content, after the information processing apparatus 10A transmits and receives information about payment necessary for obtaining a copy permission of the content with respect to a server performing a charging process such as the management server 30A, the information processing apparatus 10A transmits the copy permission request in Step S308.

On the other hand, in a case where the voucher code valid flag is set (Fig. 7: YES in Step S304), the information processing apparatus 10A prompts the user to input the voucher code through the display. When the input by the user of the information processing apparatus 10A is completed (Fig. 7: Step S305), the information processing apparatus 10A transmits the input voucher code to the management server 30A (Fig. 7: Step S306).

In the management server 30A, the voucher codes already issued are managed in a table while being each associated with the content ID (CID) and the content certificate ID (CCID) of the content. When the management server 30A obtains through the information processing apparatus 10A the voucher code (Fig. 8: Step S403), the management server 30A determines whether this voucher code is legitimate by matching between the combination of the obtained voucher code, content ID (CID), and content certificate ID (CCID), and the above-mentioned table (Fig. 8: Step 404). In a case where it is determined that the voucher code is legitimate (Fig. 8: YES in Step 404), the management server 30A transmits the success of the authentication of the voucher code to the information processing apparatus 10A (Fig. 8: Step S405).

When the information processing apparatus 10A receives the notification of the success of the authentication of the voucher code from the management server 30A (Fig. 7: YES in Step S307), the information processing apparatus 10A transmits to the management server 30A the copy permission request (Permission Request) (Fig. 7: Step S308).

When the management server 30A the copy permission request (Permission Request) from the information processing apparatus 10A (Fig. 8: Step S406), the management server 30A transmits the copy permission information (Permission) to the information processing apparatus 10A (Fig. 8: Step S407).

When the information processing apparatus 10A obtains from the management server 30A the copy permission information (Permission) (Fig. 7: Step S309), the information processing apparatus 10A transitions the content copy process (Fig. 7: Step S310).

Further, in a case where the voucher code is not transmitted, or in a case where it is determined as an illegitimate voucher code (for example, also including a case where the number of copying allowed for one voucher code is consumed) (Fig. 8: NO in Step S404), the management server 30A determines to reject the content copy process (Fig. 8: Step S408). At this time, the managed copy process on the management server 30 side is terminated. Further, in this case, the management server 30A may notify the information processing apparatus 10A that due to illegitimate voucher code, copying is not allowed, and, in the information processing apparatus 10A, the notification from the management server 30A may be provided on a display or the like to the user U.

In addition, the information processing apparatus 10A receives the notification from the management server 30A in Step S307 that the authentication of the voucher code is failed, the information processing apparatus 10A terminates the process as a result of the copy permission of the content being not obtained.

As described above, in this embodiment, the managed copy process using the voucher code is introduced in the distribution process for the rental media in which contents protected from copying are recorded, and hence, if a user likes the content of the medium 50 for rental after viewing, the user is allowed to copy that content through paying a predetermined fee. Further, in this embodiment, the payment process via the network 1 is unnecessary, and hence this embodiment has an of being more excellent in security. That is an effect due to the fact that the distribution of media for rental is basically performed through agencies.

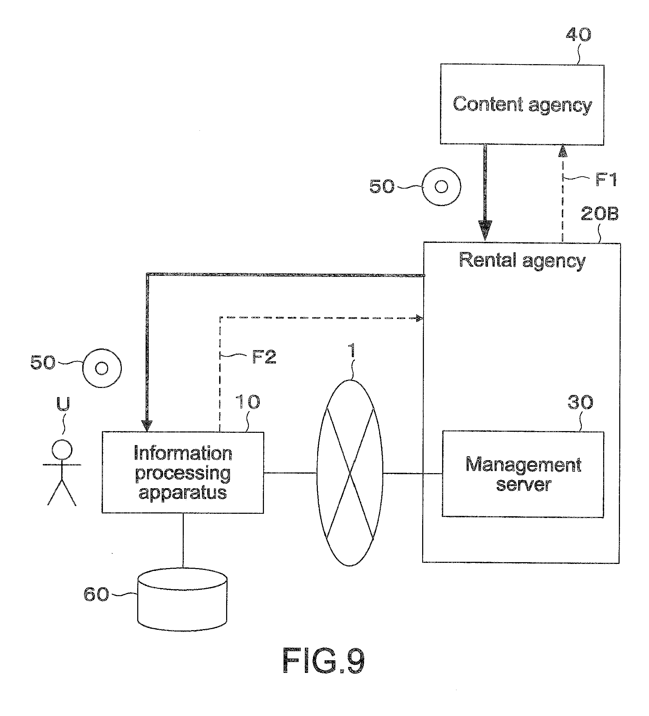

Fig. 9 is a view showing a modified example of the relation between the information processing apparatus 10 of the user, the rental agency 208, the management server 30B, and the content-providing agency 40.

In this modified example, there is employed a mode in which the rental agency 20B operates also services of the managed copy process by the management server 30B. Also in this case, it is possible to employ the method for the copy permission management of the contents of the media 50 for rental according to the first embodiment and the second embodiment, which are described above.

The present application contains subject matter related to that disclosed in Japanese Priority Patent Application JP 2010-109510 filed in the Japan Patent Office on May 11, 2010, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A server apparatus, comprising:
a first payment-information transceiver unit configured to transmit and receive, via a network with respect to an information processing apparatus capable of reproducing a rental medium bearing copy-protected content, information about payment necessary for obtaining a copy permission of the content recorded in the medium; and
a copy-permission-information providing unit configured to provide information of permitting copying of the content via the network to the information processing apparatus every time when the copy-permission-information providing unit confirms completion of the payment through the transmission and reception of the information about the payment with respect to the information processing apparatus the user.

2. The server apparatus according to claim 1, wherein
the first payment-information transceiver unit transmits and receives payment data as the information about the payment with respect to the user's information processing apparatus, and
the copy-permission-information providing unit performs a payment process through the transmission and reception of the payment data, and provides the information that permits the copying of the content via the network to the information processing apparatus when the copy-permission-information providing unit confirms completion of the payment process.

3. The server apparatus according to claim 1, wherein
the first payment-information transceiver unit receives, from the information processing apparatus of the user, authentication information indicating the completion of the payment as the information about the payment, and
the copy-permission-information providing unit determines legitimacy of the authentication information indicating the completion of the payment, and provides the information of permitting the copying of the content via the network to the information processing apparatus when the copy-permission-information providing unit determines that the authentication information is legitimate.

4. An information processing system, comprising:
an information processing apparatus of a user; and
a server apparatus,
the information processing apparatus including
a second payment-information transceiver unit configured to transmit and receive, via a network with respect to the server apparatus, information about payment necessary for obtaining a copy permission of content of a rental medium bearing copy-protected content, and
a copy process unit configured to obtain information of permitting copying of the content via the network from the server apparatus and to record a copy of the content of the rental medium in a medium for user, to thereby perform the copying of the content,
the server apparatus including
a first payment-information transceiver unit configured to transmit and receive with respect to the information processing apparatus via the network the information about payment, and
a copy-permission-information providing unit configured to provide the information of permitting copying of the content via the network to the information processing apparatus every time when the copy-permission-information providing unit confirms completion of the payment through transmission and reception of the information about the payment with respect to the information processing apparatus.
